# EUROPÄISCHE PATENTSCHRIFT

(11) **EP 1 054 532 B1**
(45) Veröffentlichungstag und Bekanntmachung des Hinweises auf die Patenterteilung: **02.06.2004**
(21) Anmeldenummer: 00108519.0
(22) Anmeldetag: 19.04.2000
(51) Int. Cl.: H04L 12/417, H04L 12/403

(54) **Datenübertragungsverfahren**
Method for transmitting data
Procédé de transmission de données

(30) Priorität: 15.05.1999 DE 19922497
(43) Veröffentlichungstag der Anmeldung: 22.11.2000
(73) Patentinhaber: Moeller GmbH, 53115 Bonn (DE)
(72) Erfinder: Heller, Franz J., 53757 St. Augustin (DE)

(56) Entgegenhaltungen:
- EP-A- 0 393 293
- US-A- 4 763 320

## Beschreibung

Die Erfindung betrifft ein Verfahren zur Datenübertragung zwischen mindestens zwei Teilnehmern eines Bussystems, insbesondere für die Datenübertragung auf der Gerätebusebene, zur kommunikativen Verbindung elektrischer und elektronischer Schalt-, Steuer- und Visualisierungsgeräte.

Derartige Teilnehmerkommunikationen werden in der Regel durch relativ aufwendige Parallelbussysteme realisiert.

Aufgabe der vorliegenden Erfindung ist es, ein Datenübertragungsverfahren sowie ein System zur Durchführung des Verfahrens zu schaffen, daß bei geringem konstruktiven und wirtschaftlichen Aufwand eine sichere und schnelle Datenübertragung gewährleistet.

Die Aufgabe wird erfindungsgemäß durch die Merkmale der unabhängigen Ansprüche gelöst.

Erfindungsgemäß wird jedem Teilnehmer des Datenübertragungsystems die Gesamtgröße eines auf einem Bus zu generierenden Datenfeldes mitgeteilt und mindestens einem Teilnehmer eineindeutig eine oder mehrere Datenfeldpositionen zugeordnet, derart, daß jede Datenfeldposition ausschließlich von dem zugeordneten Teilnehmer beschreibbar ist. Lesbar sind die Inhalte aller Datenfeldpositionen von jedem der Teilnehmer, damit jeder Teilnehmer zu jedem Zeitpunkt eine Information über den jeweiligen Bearbeitungsstand hat und weiß zu welchem Zeitpunkt er selbst an der Reihe ist, Daten an die ihm zugeordnete Datenfeldposition zu generieren. Dadurch, daß schon von Anfang an jeder Teilnehmer die Gesamtgröße des zu generierenden Datenfeldes kennt, wird eine erhöhte Datensicherheit erreicht.

Gemäß der Erfindung wird nach Senden einer Startinformation das Datenfeld in Reihenfolge der aufeinanderfolgenden Datenfeldpositionen abgearbeitet, indem jeder Teilnehmer Daten an einer oder mehreren ihm zugeordneten Datenfeldposition(en) auf den Bus überträgt beziehungsweise auf diesem generiert (Katenieren von Daten). Auf diese Weise wird das Datenfeld erstellt, von dem den Teilnehmern zu Beginn nur die Gesamtgröße und die eineindeutig zugeordneten Datenfeldpositionen zum Beschreiben bekannt sind.

In einer bevorzugten Ausführungsform der Erfindung weist jeder Teilnehmer einen identisch strukturierten Speicherbereich zur Abspeicherung jedes eingelesenen Datenfeldes auf, wobei die Daten des eingelesenen Datenfeldes vorzugsweise unmittelbar aufeinanderfolgend abgelegt beziehungsweise abgespeichert werden.

In einer anderen Ausführungsform der Erfindung werden von jedem Teilnehmer 2 alle Daten eingelesen, aber nur die Daten der Datenfeldpositionen 6 abgespeichert, die ihm zugeordnet sind. Dies hat den Vorteil, daß nur sehr wenig Speicherplatz benötigt wird. So können gegebenenfalls Teilnehmer mit Mikroprozessoren verwendet werden, die schon mit ausreichend Speicherplatz ausgestattet sind, so daß keine separaten Speichermodule in Form von RAM-Bausteinen oder dergleichen mehr benötigt werden.

Zur Durchführung des Datenübertragungsverfahrens findet erfindungsgemäß ein Datenübertragungssystem mit mindestens zwei Teilnehmern Anwendung, wobei jeder Teilnehmer zumindest eine Logikeinheit, eine Speichereinheit und eine Schnittstelle umfaßt und die Teilnehmer über einen Bus miteinander verbunden sind. Erfindungsgemäß sind die Speichereinheiten oder zumindest Teilbereiche der Speichereinheiten identisch ausgebildet, so daß jeder Teilnehmerknoten das jeweils zu übertragende Datenfeld ablegen kann und an den ihm jeweils zugeordneten Datenfeldpositionen Daten einschreibt.

Den abhängigen Ansprüchen sind vorteilhafte Weiterbildungen der Erfindung zu entnehmen.

Weitere Einzelheiten und Vorteile der Erfindung ergeben sich aus dem folgenden, anhand von Figuren erläuterten Ausführungsbeispiel. Es zeigen
- Figur 1:: schematische Darstellung des erfindungsgemäßen Verfahrens; und
- Figur 2:: eine mögliche Zusammensetzung eines Datenstrings bestehend aus Datenkopf, Datenfeld und Datenende.

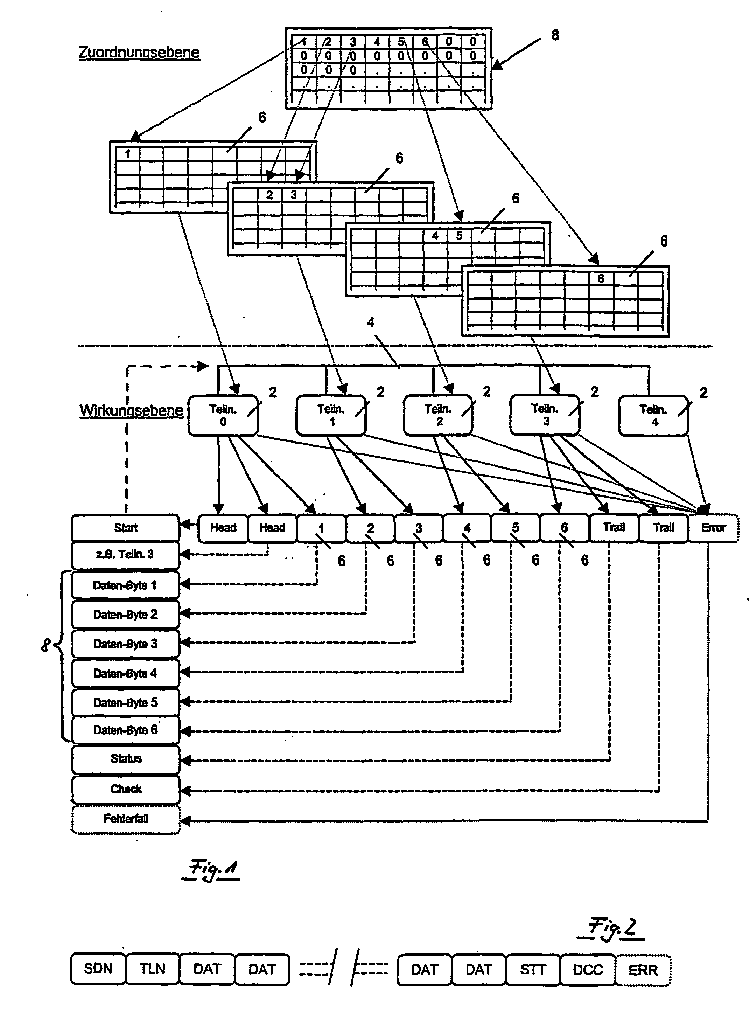

Das in Figur 1 schematisch dargestellte Verfahren zur Datenübertragung zeigt ein Datenübertragungssystem mit fünf Teilnehmern 2, die über einen Bus 4 miteinander verbunden sind.

Gemäß der Erfindung dient dieses Verfahren zur Übertragung von Daten zwischen mindestens zwei, vorzugsweise mindestens drei, Teilnehmern 2 eines Bussystems. Mindestens einem Teilnehmer 2 wird eineindeutig wenigstens eine Datenfeldposition 6 eines zu übertragenden Datenfeldes 8 zugeordnet und Informationen über die Gesamtgröße des Datenfeldes mitgeteilt. Die Datenfeldpositionen 6 können in einer Tabelle dargestellt werden, wobei die Tabelle die Abfolge und die Gesamtgröße des zu erstellenden (beziehungsweise abzuarbeitenden) Datenfeldes 8 bestimmt. Werden die Datenfeldpositionen 6 bestimmten Teilnehmern 2 zugeordnet, ist darauf zu achten, daß keine Doppelbelegung von Datenfeldpositionen vorkommt.

Nach Senden einer Startinformation an alle Teilnehmer 2 wird das System in den Betriebszustand RUN versetzt und Position für Position seriell (aufeinanderfolgend) abgearbeitet. Hierbei generieren die Teilnehmer 2 in der Reihenfolge der aufeinanderfolgenden Datenfeldpositionen 6 Daten an den ihnen zugeordneten Datenfeldpositionen 6. Nach jedem Generierungsvorgang wird das Datenfeld 8 von allen Teilnehmern 2 eingelesen.

Die Konfiguration der Teilnehmer 2 durch die Zuordnung der Datenfeldpositionen 6 zu den einzelnen Teilnehmern 2 und die Mitteilung über die Gesamtgröße des Datenfeldes 8 kann durch einen als Master ausgebildeten Teilnehmer oder aber durch ein separates Programmierwerkzeug (Programmiergerät oder PC oder dergleichen) erfolgen. Mit Vorteil erfolgt nach der Konfiguration der Teilnehmer 2 innerhalb einer definierten Pausenzeit des Busses 4 eine Synchronisation der Teilnehmer 2. Nach Ablauf dieser Pausenzeit erwarten alle Teilnehmer 2 das Startsignal. Mit Vorteil wird mit Sendung des Startsignals auch der Inhalt des Datenfeldes 8 und dessen Gesamtgröße an die Teilnehmer 2 übermittelt. Im Anschluß an das Startsignal beginnt der Teilnehmer 2, dem die erste Datenfeldposition 6 zugeordnet ist, mit der Generierung (Schreibvorgang) von Daten in die ihm zugeordnete Datenfeldposition 6. "Nach" erfolgter Generierung der Daten der ersten Datenfeldposition 6 lesen alle übrigen Teilnehmer 2 das bisher erstellte Datenfeld (bislang: Daten der ersten Datenfeldposition 6) ein. Das Einlesen durch die übrigen Teilnehmer 2 erfolgt nahezu zeitgleich mit dem Schreibvorgang des gerade mit der Datengenerierung befaßten Teilnehmers 2 ("Mithören" der übrigen Teilnehmer am Bus). So weiß jeder Teilnehmer zu jedem Zeitpunkt, wann er mit der Datengenerierung an der Reihe ist. Das Datenfeld 8, von dem anfangs lediglich die Gesamtgröße bekannt ist, wird auf diese Weise erstellt. Sollte zu irgendeinem Zeitpunkt einer der Teilnehmer 2 aus dem Teilnehmerverbund entfernt worden sein, oder defekt sein, so daß er keine Datengenerierung an den ihm zugeordneten Datenfeldposition(en) 6 vornehmen kann, wird dies von den anderen Teilnehmern 2 erkannt (da das Datenfeld 8 ja nicht bis zu Ende erstellt werden kann, sondern an dieser Stelle die Erstellung vorzeitig abgebrochen wird) und es wird ein anderer Teilnehmer 2, vorzugsweise der als Master ausgebildete Teilnehmer 2, stattdessen die Datengenerierung vornehmen.

Gemäß Figur 2 umfaßt ein zu übertragender Datenstring im wesentlichen einen Datenkopf, das zuvor bereits beschriebene Datenfeld 8 und ein Datenende.

Der Datenkopf besteht mit Vorteil aus einer Startdatennummer SDN und einer Teilnehmernummer TLN. Im Datenfeld 8 werden die Daten der einzelnen Datenfeldpositionen 6 der verschiedenen Teilnehmer 2 zusammengeführt. Das Datenende enthält vorzugsweise eine Statusinformation STT des im Datenkopf angegebenen Teilnehmers 2 sowie eine vorzugsweise von diesem Teilnehmer 2 zusammengestellte Checksumme DCC. Desweiteren wird im Fehlerfall ein Fehlersignal ERR erzeugt. Alternativ ist angedacht, die Checksummenbildung von jedem Teilnehmer 2, insbesondere gleichzeitig mit dem Vorgang der Datengenerierung an den ihm zugeordneten Datenfeldpositionen 6, durchführen zu lassen. Ist keine Fehlermeldung erfolgt und die Datenübertragung erfolgreich abgeschlossen, werden die aktualisierten Daten den Peripheriegeräten zur weiteren Verarbeitung zur Verfügung gestellt und ein erneuter Datenübertragungszyklus eingeleitet.

Im gezeigten Ausführungsbeispiel ist, mit Ausnahme des Teilnehmers-"Vier", jedem Teilnehmer 2 mindestens eine Datenfeldposition 6 eines Datenfeldes 8 zugeordnet. Teilnehmer-"Null" ist das Datum an Position "Eins", Teilnehmer-"Eins" die Daten der Positionen "Zwei" und "Drei", Teilnehmer-"Zwei" die Daten der Positionen "Vier" und "Fünf" und Teilnehmer-"Drei" die Position des Datums "Sechs" zugeordnet. Ferner ist der Teilnehmer-"Drei" ausgewählt worden ein Statusbyte sowie eine Datenchecksumme zu generieren. Der Teilnehmer-"Vier" ist im dargestellten Beispiel nicht für die Generierung von Daten vorgesehen, er liest aber ebenfalls alle auf dem Bus generierten Daten und verarbeitet die für ihn vorgesehenen Daten weiter. Damit dieser Teilnehmer überwacht werden kann ist vorgesehen, daß er zumindest ein Statussignal und ein Checksummensignal generieren kann. Jedes Datum entspricht vorzugsweise einer Datenlänge von einem Byte. Erfindungsgemäß werden die Teilnehmer 2 in der Reihenfolge der im Datenfeld 8 hinterlegten Datenfeldpositionen 6 abgearbeitet, das heißt, daß hier nach einem erfolgten Startsignal für den Ablauf der Datenübertragung zuerst Teilnehmer-"Null" Datum "Eins" in das Datenfeld 8 einschreibt, dann Teilnehmer-"Eins" die Daten "Zwei" und "Drei" schreibt, danach Teilnehmer-"Zwei" die Daten "Vier" und "Fünf" schreibt und schließlich Teilnehmer-"Drei" das Datum "Sechs" schreibt. Das Datenfeld 8 bestimmt hierbei die Reihenfolge in der die einzelnen Teilnehmer 2 aktiv werden und jeweils in die ihnen zugeordnete Datenfeldposition(en) 6 schreiben. Nach beziehungsweise mit jedem Schreibvorgang eines Teilnehmers 2 erfolgt ein Einlesen des bis dahin erstellten Datenfeldes 8. Um die Datensicherheit noch weiter zu erhöhen, wird ein zusätzliches Bit, vorzugsweise ein neuntes Datenbit, verwendet, mit dessen Hilfe jeder Teilnehmer mit der Generierung seiner Daten auch deren Gültigkeit den anderen Teilnehmern 2 mitteilt.

Im dargestellten Beispiel werden die Teilnehmer 2 in der Reihenfolge ihrer Numerierung aktiv. Dies ist zwar vorteilhaft, aber nicht zwingend erforderlich. Die Teilnehmer 2 können ebensogut durcheinander aktiv werden, jeweils in Abhängigkeit von der jeweiligen Zuordnung der Datenfeldpositionen 6 des Datenfeldes 8 zu dem jeweiligen Teilnehmer 2. Es könnte zum Beispiel Teilnehmer-"Eins" auch statt der Daten "Zwei" und "Drei" die Daten "Zwei" und "Sechs" und dem Teilnehmer-"Drei" das Datum "Drei" statt des Datums "Sechs" zugeordnet werden, so daß die Teilnehmer 2 in der Reihenfolge "Null", "Eins", "Drei", "Zwei", "Zwei", "Eins" aktiv würden. Beliebige Variationen sind hier möglich.

Im dargestellten Ausführungsbeispiel ist der Teilnehmer-"Null" als Master ausgebildet, der neben der Zuordnung zu Datenfeldposition "Eins" das Startsignal generiert und einen Teilnehmer 2, hier Teilnehmer-"Drei", auswählt, der dann nach erfolgter Abarbeitung des Datenfeldes 8 ein Statussignal und/oder eine Checksumme anhängt. Desweiteren kann über diesen Master auch die Konfiguration aller Teilnehmer erfolgen.
Fehlersignale können von jedem der Teilnehmer 2 generiert werden, so daß bei Vorliegen eines Fehlersignals nach Abarbeitung des gesamten Datenstrings, der gesamte Datenstringinhalt verworfen (gelöscht) wird und ein neuer Datenübertragungszyklus erfolgt.

Die vorliegende Erfindung ist nicht auf die vorstehend beschriebenen Ausführungsformen beschränkt, sondern umfaßt auch alle im Sinne der Erfindung gleichwirkenden Ausführungsformen.

Zuvor beschrieben wurde ein Verfahren, welches sequentiell, in der Reihenfolge aufeinanderfolgender Datenfeldpositionen 6, Daten an diesen Positionen generiert und auf dem Bus 4 zur Verfügung stellt. Hierbei liest jeder (oder jeder, mit Ausnahme des gerade mit der Datengenerierung befaßten, Teilnehmers 2) Teilnehmer 2 nach jedem Generierungsvorgang die auf dem Bus befindlichen Daten ein. Auf diese Weise weiß auch jeder Teilnehmer zu welchem Zeitpunkt er an der Reihe ist seine Daten an der ihm zugewiesenen Datenfeldposition 6 zu generieren.

In einer anderen Ausführung der Erfindung ist vorgesehen, die Teilnehmer 2 mit einer Taktsignalleitung zu verbinden und jeden Teilnehmer 2 zu einem bestimmten (Takt-)Zeitpunkt (1. Takt, 2.Takt ..... n-ter Takt) seine Daten an die ihm zugeordnete Datenfeldposition 6 generieren zu lassen. Hierfür wird natürlich jedem Teilnehmer 2 vor oder mit Senden des Startsignals mitgeteilt, zu welchem (Takt-)Zeitpunkt er seine Daten zu generieren hat.

## Patentansprüche

1. Verfahren zur Übertragung von Daten zwischen mindestens zwei Teilnehmern (2) eines Bussystems,
- wobei jeder Teilnehmer (2) eine Logikeinheit, eine Speichereinheit und eine Schnittstelle umfaßt, und
- jedem Teilnehmer (2) Informationen über die Gesamtgröße eines Datenfeldes (8) mitgeteilt werden,
- mindestens einem der Teilnehmer (2) eineindeutig wenigstens eine Datenfeldposition (6) des Datenfeldes (8) zum Beschreiben zugeordnet wird, und
- nach Senden einer Startinformation an alle Teilnehmer (2) das Datenfeld (8) in der Reihenfolge der aufeinanderfolgenden Datenfeldpositionen (6) Position für Position abgearbeitet wird, indem jeder Teilnehmer (2) Daten in die ihm zugeordnete Datenfeldposition beziehungsweise -positionen (6) einschreibt.

2. Verfahren nach Anspruch 1, **dadurch gekennzeichnet, daß** zumindest alle Teilnehmer (2), die nicht mit der Generierung von Daten befaßt sind, nach jedem Datengenerierungsvorgang eines Teilnehmers (2) die Daten des gesamten Datenfeldes (8) einlesen.

3. Verfahren nach Anspruch 1, **dadurch gekennzeichnet, daß** ein Taktsignal verwendet wird und jeder Teilnehmer (2) zu einem definierten Zeitpunkt Daten generiert.

4. Verfahren nach Anspruch 1-3, **dadurch gekennzeichnet, daß** jeder Teilnehmer (2) nach Schreiben der Daten in die ihm zugeordnete Datenfeldposition (6) diese Daten zurückliest, mit den zuvor geschrieben Daten vergleicht und bei Vorliegen einer Datenabweichung ein Fehlersignal generiert.

5. Verfahren nach Anspruch 1-4, **dadurch gekennzeichnet, daß** jeder Teilnehmer (2) lediglich die Daten der ihm zugeordneten Datenfeldpositionen (6) abspeichert.

6. Verfahren nach Anspruch 1-4, **dadurch gekennzeichnet, daß** jeder Teilnehmer (2) einen identisch strukturierten Speicherbereich aufweist und das eingelesene Datum einer jeden Datenfeldposition (6) in diesem Speicherbereich abgespeichert wird.

7. Verfahren nach Anspruch 1-6, **dadurch gekennzeichnet, daß** nach einer gesendeten Startinformation an alle Teilnehmer (2) mindestens ein Teilnehmer (2) bestimmt wird, der nach Bearbeitung des letzten Datums seine Statusinformation ermittelt und dem Datenfeld (8) anschließt.

8. Verfahren nach Anspruch 1-7, **dadurch gekennzeichnet, daß** nach gesendeter Startinformation mindestens ein Teilnehmer (2) bestimmt wird, der nach Bearbeitung des letzten Datums eine Checksummeninformation bildet und dem Datenfeld (8) anschließt.

9. Datenübertragungssystem zur Durchführung des Verfahrens nach einem oder mehreren der Ansprüche 1-8, mit mindestens zwei über einen Bus (4) verbundenen Teilnehmern (2),
- wobei jeder Teilnehmer (2) eine Logikeinheit eine Speichereinheit und eine Schnittstelle umfaßt,
- wobei Mittel vorhanden sind wodurch jedem Teilnehmer (2) Informationen über die Gesamtgröße eines Datenfeldes (8) mitgeteilt werden, und
- jeder Teilnehmer (2) derart ausgebildet ist, daß ihm eineindeutig ein bzw. mehrere Speicherplätze des Datenfeldes (8) zuordenbar sind derart, daß jede Datenfeldposition (6) ausschließlich von dem jeweils zugeordneten Teilnehmer (2) beschreibbar ist.

10. Datenübertragungssystem nach Anspruch 9, **dadurch gekennzeichnet, daß** die Speichereinheiten aller Teilnehmer (2) identisch strukturiert sind.

## Claims

1. Method for the transmission of data between at least two stations (2) on a bus system,
- wherein each station (2) includes a logic unit, a memory unit and an interface, and
- information on the total size of a data field (8) is communicated to each station (2),
- at least one data field position (6) of the data field (8) for enlisting is one-to-one assigned to at least one of the stations (2), and
- after sending a start information to all stations (2) the data field (8) will be executed position by position in the order of successive data field positions (6), with each station (2) writing data into said data field position or positions (6) assigned to said station.

2. Method according to claim 1, **characterized in that** at least all the stations (2), which are not busy generating data, read in the data of the complete data field (8) after each data generation executed by a station (2).

3. Method according to claim 1, **characterized in that** a clock signal is used and **in that** each station (2) generates data at a defined point in time.

4. Method according to one of claims 1 to 3, **characterized in that** each station (2) reads out the data which have been written into the data field position (6) assigned to said station, compares said data with the data enlisted before, and generates an error signal when a discrepancy of data occurs.

5. Method according to one of claims 1 to 4, **characterized in that** each station (2) only stores the data of data field positions (6) assigned to said station.

6. Method according to one of claims 1 to 4, **characterized in that** each station (2) has an identically structured storage range and **in that** the data enlisted in each data field position (6) is stored in said storage range.

7. Method according to one of claims 1 to 6, **characterized in that** after transmitting a start information to all stations (2) at least one station (2) is appointed, which evaluates its status information after executing the last data and adds said status information to the data field (8).

8. Method according to one of claims 1 to 7, **characterized in that** after transmitting a start information at least one station (2) is appointed, which produces a check sum information after executing the last data and adds said information to the data field (8).

9. Data transmission system for executing the method of any one or more of claims 1 to 8 including at least two stations (2) connected via a bus (4),
- wherein each station (2) includes a logic unit, a memory unit and an interface,
- where means are provided, by which information on the total size of a data field (8) is communicated to each station (2), and
- each station (2) is configured so that one or more storage positions of the data field (8) is/are one-to-one assignable to said station in such a way that each data field position (6) can be written into exclusively by the station (2) assigned to it.

10. Data transmission system according to claim 9, **characterized in that** the memory units of all stations (2) are structured identically.

## Revendications

1. Procédé pour transmettre des données entre au moins deux participants (2) reliés par un bus,
- où chaque participant (2) comporte une unité logique, une unité mémoire et une interface, et
- où sont transmises à chaque participant (2) des informations sur la taille totale d'un champ de données (8),
- où est associée de façon injective, à au moins un des participants (2), au moins une position de champ de données (6) du champs de données (8) pour l'inscription, et
- où l'on traite position par position, après l'émission d'une information de démarrage à tous les participants (2), le champ de données (8) dans l'ordre des positions de champ de données (6) successives; chaque participant (2) inscrivant des données dans la ou les position(s) (6) de champ de données associée(s) à ce participant.

2. Procédé selon la revendication 1, **caractérisé en ce qu'** au moins tous les participants (2) qui ne sont pas concernés par la génération de données, lisent les données de tout le champs de données (8) après chaque procédure de génération de données d'un participant (2).

3. Procédé selon la revendication 1, **caractérisé en ce qu'**un signal d'horloge est utilisé et que chaque participant (2) génère des données à un moment défini.

4. Procédé selon la revendication 1 à 3, **caractérisé en ce que** chaque participant (2) relise les données après l'inscription de ces données dans la position de champ de données (6) associée au participant, compare ces données avec les données inscrites auparavant et génère un signal d'erreur dans le cas d'une présence d'écart de données.

5. Procédé selon la revendication 1 à 4, **caractérisé en ce que** chaque participant (2) mémorise uniquement les données des positions de champ de données (6) lui associées.

6. Procédé selon la revendication 1 à 4, **caractérisé en ce que** chaque participant (2) comporte une zone de mémoire structurée de façon identique et que la date inscrite de chaque position de champ de données (6) est mémorisée dans cette zone de mémoire.

7. Procédé selon la revendication 1 à 6, **caractérisé en ce qu'**au moins un participant (2) est déterminé, après l'envoi d'une information de démarrage à tous les participants, lequel participant génère son information d'état après le traitement de la dernière date et connecte cette information au champ de données (8).

8. Procédé selon la revendication 1 à 7, **caractérisé en ce qu'**au moins un participant (2) est déterminé, après l'envoi de l'information de démarrage, lequel participant génère une information d'addition de vérification après le traitement de la dernière date et connecte cette information au champ de données (8).

9. Système de transmission de données pour réaliser le procédé selon une ou plusieurs des revendications 1 à 8, avec au moins deux participants (2) reliés par un bus (4),
- chaque participant (2) comportant une unité logique, une unité de mémoire et une interface,
- où il existe des moyens via lesquels des informations sur la taille totale d'un champ de données (8) sont transmises, et
- chaque participant (2) étant réalisé de manière à pouvoir associer de façon injective une ou plusieurs places de mémoire du champ de données (8) de manière à pouvoir inscrire chaque position de champ de données (6) uniquement par le participant (2) associé à cette position.

10. Système de transmission de données selon la revendication 9, **caractérisé en ce que** les unités de mémoire de tous les participants (2) sont structurés de façon identique.
